# EUROPÄISCHE PATENTSCHRIFT

(11) **EP 3 069 931 B1**
(45) Veröffentlichungstag und Bekanntmachung des Hinweises auf die Patenterteilung: **14.11.2018**
(21) Anmeldenummer: 16155206.2
(22) Anmeldetag: 11.02.2016
(51) Int. Cl.: B60Q 1/068, B60Q 1/076

(54) **EINSTELLSYSTEM FÜR EINEN FAHRZEUGSCHEINWERFER**
ADJUSTING SYSTEM FOR A VEHICLE HEADLAMP
SYSTÈME DE RÉGLAGE DE PHARE DE VÉHICULE

(30) Priorität: 17.03.2015 AT 502142015
(43) Veröffentlichungstag der Anmeldung: 21.09.2016
(73) Patentinhaber: ZKW Group GmbH, 3250 Wieselburg (AT)
(72) Erfinder: Pichler, Johannes, 3610 Wösendorf (AT); Hauer, Clemens, 3261 Steinakirchen am Forst (AT)
(74) Vertreter: Patentanwaltskanzlei Matschnig & Forsthuber OG

(56) Entgegenhaltungen:
- CN-U- 202 879 332
- DE-A1- 10 131 098
- US-A1- 2002 114 660
- US-A1- 2011 044 063
- US-A1- 2014 307 456

## Beschreibung

Die Erfindung betrifft ein Einstellsystem zum Einstellen eines optisch relevanten Bauteils eines Fahrzeugscheinwerfers, umfassend eine Tragrahmenkonstruktion mit einem ersten und einem zweiten Lagerpunkt, die eine erste Achse ausbilden, einen zumindest teilweise innerhalb der Tragrahmenkonstruktion angeordneten Schwenkrahmens und eine erste Verstellvorrichtung.
Des Weiteren betrifft die Erfindung ein Fahrzeugscheinwerfergehäuse mit einem in dem Fahrzeugscheinwerfergehäuse aufgenommenen erfindungsgemäßen Einstellsystem sowie einen Fahrzeugscheinwerfer, insbesondere einen Kraftfahrzeugscheinwerfer, mit dem erfindungsgemäßen Einstellsystem oder dem erfindungsgemäßen Fahrzeugscheinwerfergehäuse.
Aus dem Stand der Technik sind Einstellsysteme bekannt geworden, die zum Einstellen von Linsen oder von Lichtquellen eines Fahrzeugscheinwerfers eingerichtet sind. Diese Einstellsysteme wurden bisher in einem Fahrzeugscheinwerfergehäuse untergebracht, indem das Einstellsystem manuell innerhalb des Fahrzeugscheinwerfergehäuses aufgebaut wurde. Das Fahrzeugscheinwerfergehäuse verfügt dabei über entsprechende Aufnahmen sowie beispielsweise Führungsbahnen, die zur Aufnahme und Führung einzelner Komponenten des Einstellsystems vorgesehen sind. Solche Einstellsysteme können erst nach erfolgten Einbau in das Fahrzeugscheinwerfergehäuse in Betrieb genommen und/oder einem Funktionstest unterzogen werden, da erst durch den Einbau des Einstellsystems in das Fahrzeugscheinwerfergehäuse die Positionen einzelner Komponenten des Einstellsystems zueinander festgelegt werden und die Funktionalität erst dadurch gewährleistet ist. DE 101.31.098 offenbart ein Einstellsystem gemäß dem Oberbegriff des Anspruchs 1.

Diese Einstellsysteme weisen den Nachteil auf, dass das Fahrzeugscheinwerfergehäuse auf das Einstellsystem abgestimmt werden muss und daher bereits in der Produktion für den Einbau eines bestimmten Einstellsystems vorbereitet werden muss. Änderungen an dem Fahrzeugscheinwerfer, insbesondere an einem Fahrzeugscheinwerfergehäuse bedingen daher oftmals Änderungen an den Einstellsystemen. Aus diesem Grund können bekannte Einstellsysteme zumeist nur für jenen Scheinwerfer eingesetzt werden, für die sie konzipiert wurden. Ein vielseitiger Einsatz ist aufgrund von Inkompatibilitäten zumeist nicht möglich.

Es ist daher eine Aufgabe der Erfindung ein Einstellsystem zu schaffen, dass vielseitig einsetzbar ist und gleichzeitig kostengünstig und in hoher Qualität hergestellt werden kann.

Diese Aufgabe wird mit einem Einstellsystem gemäß Anspruch 1 gelöst. Durch das Vorsehen einer Tragrahmenkonstruktion, in der ein Schwenkrahmen schwenkbar gehalten ist, wird eine kompakte Einstellvorrichtung geschaffen, die im Prinzip in beliebige Scheinwerfergehäuse eingebaut werden kann. Dadurch können aufwendige Vorbereitungsarbeiten an einem Scheinwerfergehäuse, wie beispielsweise das Implementieren von entsprechenden Führungsbahnen, entfallen. Außerdem können solcherart geschaffene Einstellsysteme unabhängig von dem Scheinwerfergehäuse zusammen gebaut und erst später in diesem montiert werden. Der Zusammenbau des Einstellsystems wird dadurch erleichtert. Außerdem kann ein solcherart geschaffenes Einstellsystem im Hinblick auf die Konstruktion und Materialauswahl für Zwecke der Verstellung eines optisch relevanten Bauteils optimiert werden, da Material- und Fertigungsanforderungen, die an das Fahrzeugscheinwerfergehäuse gestellt werden, nicht zwingend für das Einstellsystem gelten, welches nunmehr weitgehend losgelöst von dem Scheinwerfergehäuse optimiert werden kann.
Im Rahmen dieser Offenbarung beziehen sich Angaben über die Lage bzw. Orientierung von Komponenten im Allgemeinen auf einen eingebauten Zustand der jeweiligen Komponente.
Als optisch relevanten Bauteile werden insbesondere Blenden(anordnungen), Lichtquellen, insbesondere LED und/oder Laserlichtquellen, Reflektoren, Linsen und/oder ganze Lichtmodule bzw. Baugruppen, etc. angesehen. Es können daher einzelne oder eine Mehrzahl dieser genannten Komponenten das optisch relevante Bauteil ausbilden, welches mit Hilfe des Einstellsystems einstellbar ist.

Gemäß der Erfindung ist vorgesehen dass die erste Verstellvorrichtung ein elektromotorisches Stellmittel umfasst, welches an dem ersten Lagerpunkt zur Drehung des Schwenkrahmens um die erste Achse angreift. Die Verstellung kann damit beispielsweise automatisiert und/oder ferngesteuert erfolgen.

Außerdem ist vorgesehen dass die erste Verstellvorrichtung zudem ein manuell bedienbares Stellmittel umfasst, welches zur Drehung des elektromotorischen Stellmittels um die erste Achse an dem elektromotorischen Stellmittel angreift. Damit kann manuelle Grundeinstellung in einfacher Weise realisiert werden.
Besonders günstig kann es sein, wenn das manuell bedienbare Stellmittel außerhalb von dem ersten Punkt an dem elektromotorischen Stellmittel angreift.
Um eine besonders umfangreiche Einstellbarkeit durch das Einstellsystem zu ermöglichen, kann vorgesehen sein, dass das Einstellsystem eine zweite Verstelleinrichtung aufweist, mittels welcher der zweite Lagerpunkt verschiebbar ist. Durch das Verschieben des zweiten Lagerpunktes kann der optisch relevante Bauteil bzw. der Schwenkrahmen mittels der zweiten Verstelleinrichtung um eine zweite Achse, vorzugsweise um eine horizontale Achse, verschwenkt werden, wodurch beispielsweise eine Leuchtweitenregulierungsfunktion realisiert werden kann. Hierfür kann es insbesondere vorgesehen sein, dass der zweite Lagerpunkt in Richtung einer Hauptabstrahlrichtung des optisch relevanten Bauteils verschiebbar ist. Dabei kann es günstig sein, wenn die zweite Verstelleinrichtung ein elektromotorisches Stellmittel aufweist. Damit ist kann eine Verstellung durch die zweite Verstelleinrichtung automatisiert und/oder ferngesteuert erfolgen.
Insbesondere kann es vorgesehen sein, dass die zweite Verstelleinrichtung ein manuell bedienbares Stellmittel aufweist. Damit kann manuelle Grundeinstellung in einfacher Weise realisiert werden.
Insbesondere kann es vorgesehen sein, dass das elektromotorische und das manuell bedienbare Stellmittel der zweiten Verstelleinrichtung jeweils zur Erzeugung einer Verschiebebewegung eingerichtet sind, die einander überlagert sind. Damit können die Verstellbewegungen des manuell bedienbaren Stellmittels und des elektromotorischen Stellmittels superpositioniert werden, wodurch die Vorteile einer manuellen Grundeinstellung mit einer automatisierten elektrischen Fernsteuerung kombiniert werden können.

Besonders günstig kann es sein, wenn dass das manuell bedienbare Stellmittel ein manuell drehbares Drehelement aufweist, welches über ein Kegelradgetriebe zur Drehung einer Führungsstange eingerichtet ist, wobei die Führungsstange zumindest einen Gewindeabschnitt aufweist, der Verdrehung oder Verschiebung des ersten oder des zweiten Lagerpunktes eingerichtet ist. Der Gewindeabschnitt steht dabei mit dem ersten oder dem zweiten Lagerpunkt in Eingriff. Diese Konstruktion ist besonders kompakt und gut geeignet, eine manuell bedienbares Stellmittel an einem zu einem späteren Zeitpunkt um das Einstellsystem herum angeordneten Fahrzeugscheinwerfergehäuse anzubringen.

Insbesondere kann es vorgesehen sein, dass der erste Lagerpunkt -durch ein zumindest abschnittsweise kugelförmiges erstes Lagerelement ausgebildet ist, wobei der Schwenkrahmen eine zu dem ersten Lagerelement korrespondierende Lagerschale aufweist, wobei das erste Lagerelement zumindest ein quer zur ersten Achse abstehendes Fixierelement aufweist, welches in eine in der Lagerschale vorgesehenen Öffnung eingreift. Damit kann eine Drehbewegung des Lagerelements besonders effizient auf den Schwenkrahmen übertragen werden, wobei weiterhin die Möglichkeit gegeben ist, den Schwenkrahmen um verbleibende Achsen zu schwenken. Besonders günstig ist es dabei, wenn das Fixierelement als zwei normal zur ersten Achse orientierte koaxiale Bolzen ausgebildet ist. Außerdem kann es vorgesehen sein, dass die Öffnung in der Lagerschale schlitzförmig ausgebildet ist.

Um den Schwenkrahmen besonders einfach um eine zweite, vorzugsweise horizontale, Achse schwenken zu können, kann es vorgesehen sein, dass das manuell bedienbare Stellmittel ein manuell drehbares Drehelement aufweist, welches über ein Kegelradgetriebe zur Drehung einer Führungsstange eingerichtet ist, wobei an der Führungsstange ein entlang der der Führungsstange verschiebbares, mit dieser drehfest verbundenes Übertragungselement angeordnet ist, welches Übertragungselement zumindest einen Gewindeabschnitt aufweist, der zur Verdrehung oder Verschiebung des zweiten Lagerpunktes eingerichtet ist.

Besonders vorteilhaft ist es dabei, wenn ein entlang der Führungsstange verschiebbares zweites Lagerelement mit dem Gewindeabschnitt dergestalt in Eingriff steht, dass eine Drehbewegung des Übertragungselements eine Verschiebebewegung des zweiten Lagerelements bewirkt, wobei der zweite Lagerpunkt an dem zweiten Lagerelement ausgebildet ist, wobei die Position des Übertragungselements an der Führungsstange mittels eines Halterungsmittels festgelegt wird, welches mit dem Übertragungselement zur gemeinsamen Verschiebung entlang der Führungsstange verbunden ist, wobei das elektromotorische Stellmittel zur gemeinsamen Verschiebung des Übertragungselements und des Halterungsmittels an dem Halterungsmittel angreift. Dies erlaubt es, das zweite Lagerelement mit Hilfe der zweiten Verstelleinrichtung in Richtung einer Hauptabstrahlrichtung des optisch relevanten Bauteils zu verschieben, wobei die Bewegung der manuellen und der elektromotorischen Stellmittel einander superpositioniert werden können.

Eine besonders robuste und einfache Verbindung des Schwenkrahmens mit dem Lagerelement ist gegeben, wenn der Schwenkrahmen eine Führungsöffnung aufweist, die zur Aufnahme eines kugelförmigen Abschnitts des zweiten Lagerelements eingerichtet ist und parallel zu ersten Achse orientiert ist, wobei der zweite Lagerpunkt an dem kugelförmigen Abschnitt ausgebildet ist. Insbesondere ist das zweite Lagerelement mit Hilfe der zweiten Verstelleinrichtung in Richtung einer Hauptabstrahlrichtung des optisch relevanten Bauteils verschiebbar.

Das erste und das zweite Lagerelemente bilden dabei einen Teil der Tragrahmenkonstruktion.

Ein weiterer Aspekt der Erfindung betrifft ein Fahrzeugscheinwerfergehäuse mit einem in dem Fahrzeugscheinwerfergehäuse aufgenommenen erfindungsgemäßen Einstellsystem sowie einen Fahrzeugscheinwerfer mit einem solchen Einstellsystem und/oder einem solchen Fahrzeugscheinwerfergehäuse.

Die Erfindung ist im Folgenden an Hand einer beispielhaften und nicht einschränkenden Ausführungsform näher erläutert, die in den Figuren veranschaulicht ist. Darin zeigt
Figur 1 ein Einstellsystem gemäß einer beispielhaften Ausführungsform der Erfindung,
Figur 2 eine perspektivische Darstellung dieses erfindungsgemäßen Einstellsystems inklusive Tragrahmen,
Figur 3 eine perspektivische Darstellung des Schwenkrahmens in Verbindung mit einzelnen Komponenten des Einstellsystems,
Figur 4 einen Ausschnitt einer Unterseite des Einstellsystems,
Figur 5 eine perspektivische Darstellung auf einen Ausschnitt einer Tragrahmenkonstruktion sowie eine damit verbundene zweite Verstellvorrichtung,
Figur 6 eine Schnittdarstellung eines manuellen Stellmittels,
Figur 7 eine Untersicht auf das Einstellsystem,
Figur 8 eine perspektivische eines Fahrzeugscheinwerfergehäuses mit einem darin aufgenommenen Einstellsystem.

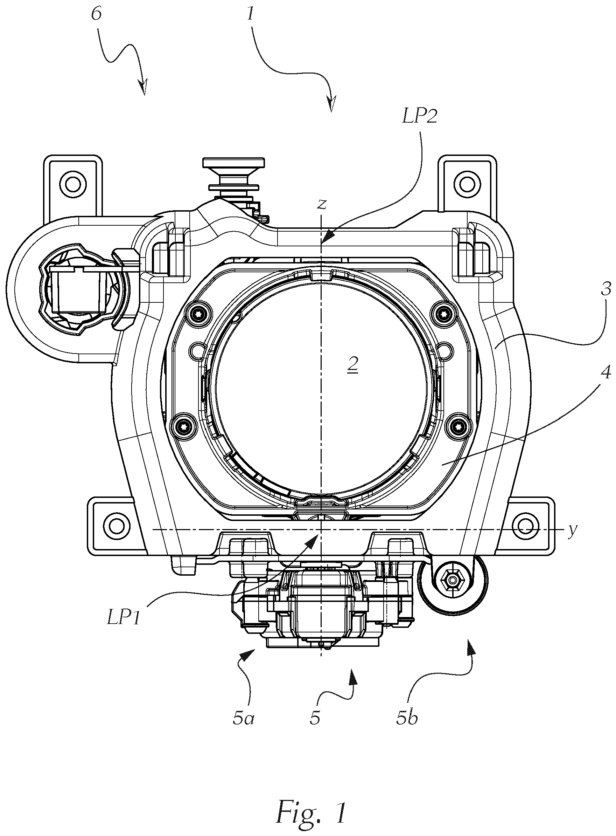

Figur 1 zeigt eine Vorderansicht einer beispielhaften Ausführungsform des erfindungsgemäßen Einstellsystems 1. Das Einstellensystem 1 ist zum Einstellen eines optisch relevanten Bauteils 2 eines (in den Figuren nicht dargestellten) Fahrzeugscheinwerfers eingerichtet, und umfasst eine Tragrahmenkonstruktion 3, an der ein erster und ein zweiter Lagerpunkt LP1 und LP 2 angeordnet ist, wobei diese Lagerpunkte in der Darstellung gemäß Figur 1 verdeckt sind und bei der Diskussion der nachfolgenden Figuren näher erörtert werden. Der erste und der zweite Lagerpunkt LP1 und LP2 bilden gemeinsam eine erste Achse z aus, die durch diese beiden Punkte verläuft. Das Einstellsystem 1 umfasst ferner einen zumindest teilweise innerhalb der Tragrahmenkonstruktion 3 angeordneten Schwenkrahmen 4 und eine erste Verstellvorrichtung 5, wobei der Schwenkrahmen 4 zur Aufnahme des optisch relevanten Bauteils 2 eingerichtet ist und mittels der ersten Verstellvorrichtung 5 um die erste Achse z, die vorzugsweise vertikal orientiert ist, verschwenkbar, insbesondere drehbar, ist. Bei dem optisch relevanten Bauteil 2 handelt sich im gezeigten Ausführungsbeispiel um ein Lichtmodul, das eine Linse umfasst, wobei vor (also entgegen der Abstrahlrichtung des Lichtmoduls) der Linse typischerweise Lichtquellen angeordnet sind. Diese Lichtquellen sowie weitere optisch relevante Bauteile können ein Bestandteil des Lichtmoduls sein und sind nicht explizit in den Figuren dargestellt. Dem Fachmann ist natürlich bekannt, dass die eingangs genannten optisch relevanten Bauteile durch den Schwenkrahmen 3 aufgenommen werden können, insbesondere mit diesem fest verbunden sein können.

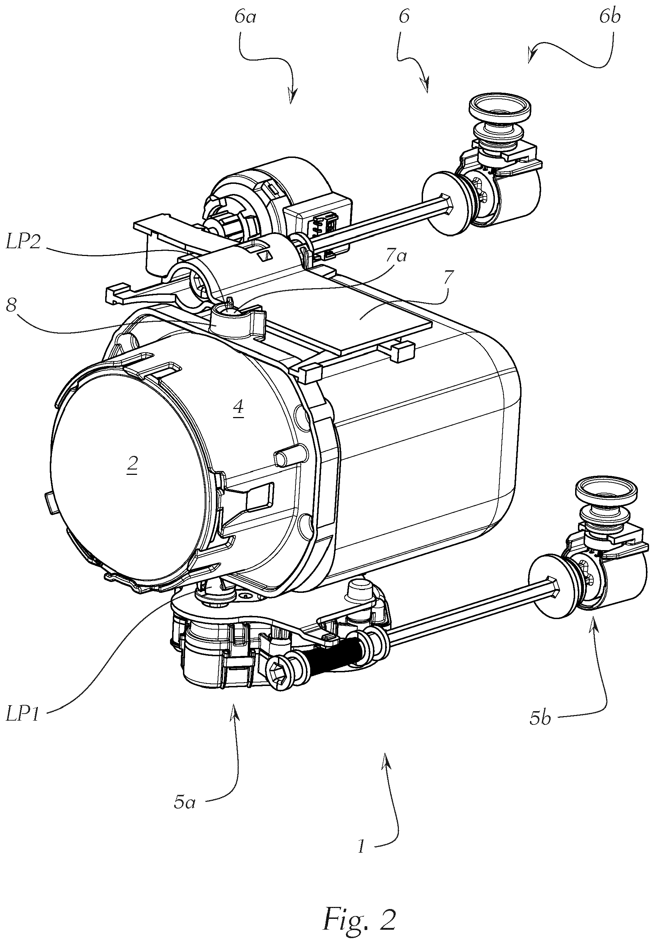

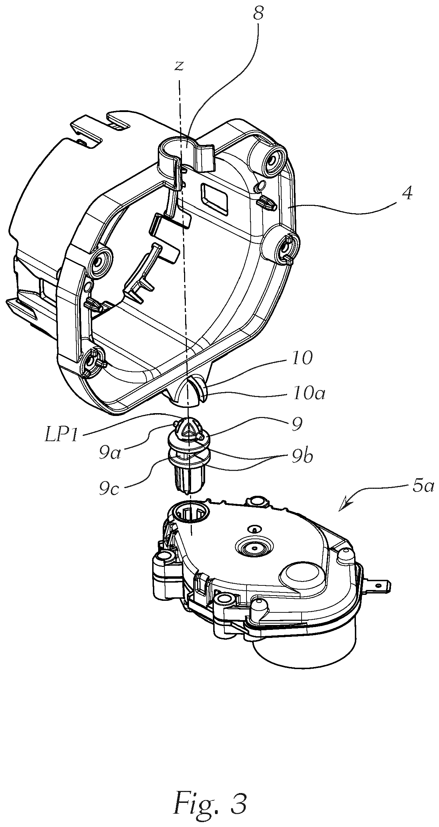

Die erste Verstellvorrichtung 5 umfasst ein elektromotorisches Stellmittel 5a, welches an dem ersten Lagerpunkt LP1 zur Drehung des Schwenkrahmens 4 um die erste Achse z angreift. Der erste Lagerpunkt LP1 ist an einem in Fig. 2 und 3 dargestellten ersten Lagerelement 9 angeordnet. Die erste Verstellvorrichtung 5 umfasst zudem ein manuell bedienbares Stellmittel 5b, welches zur Drehung des elektromotorischen Stellmittels 5a um die erste Achse z an dem elektromotorischen Stellmittel 5a angreift. Dabei greift das manuell bedienbare Stellmittel 5b außerhalb von dem ersten Punkt an dem elektromotorischen Stellmittel 5a an, und zwar so, dass der Angriffspunkt an dem elektromotorischen Stellmittel von der erste Achse z beabstandet ist. Dadurch kann zum Beispiel durch eine Verschiebebewegung des manuell bedienbare Stellmittels 5b ein Drehmoments auf das elektromotorischen Stellmittel 5a übertragen werden, wodurch das elektromotorischen Stellmittel 5a in Drehung versetzt werden kann.

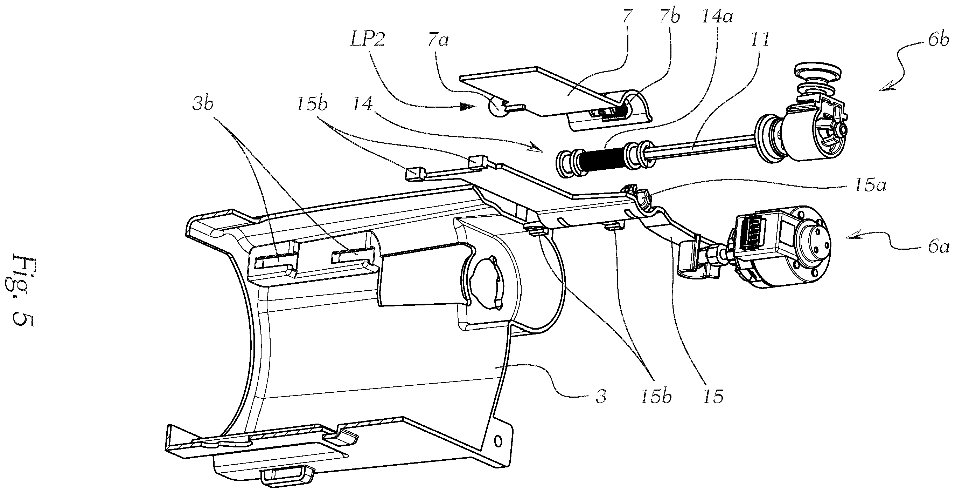

Außerdem ist in Figur 1 eine zweite Verstelleinrichtung 6 teilweise dargestellt, die dazu eingerichtet ist das optisch relevante Bauteil 2 um eine zweite Achse y, die vorzugsweise horizontal orientiert ist, zu schwenken. Die zweite Verstelleinrichtung 6 wird mit Blick auf die Figur 2 nun näher beschrieben. Figur 2 zeigt eine perspektivische Darstellung des erfindungsgemäßen Einstellsystems 1, wobei darin veranschaulicht ist, dass die zweite Verstelleinrichtung 6 dazu eingerichtet ist, den zweiten Lagerpunkt LP2 zu verschieben. Dabei ist der Lagerpunkt LP2 durch ein einen kugelförmigen Abschnitt 7a eines zweiten Lagerelementes 7 ausgebildet, wobei dieses Lagerelement 7 in Richtung einer Hauptabstrahlrichtung des optisch relevanten Bauteils 2 verschiebbar ist, die typischerweise mit der Fahrtrichtung eines Fahrzeugs übereinstimmt, wenn das Einstellsystem 1 in einem Fahrzeugscheinwerfer im Fahrzeug verbaut ist. Zu diesem Zweck weist die Tragrahmenkonstruktion 3 Führungsmittel auf, wobei auf die Arbeitsweise der Bewegungsübertragung auf das zweite Lagerelement 7 im Rahmen der Diskussion der Fig. 5 näher erklärt wird. Die zweite Verstelleinrichtung 6 weist ein elektromotorisches Stellmittel 6a und ein manuell bedienbares Stellmittel 6b auf. Bei beiden Verstelleinrichtungen 5 und 6 sind die elektromotorischen und die manuell bedienbaren Stellmittel 5a, 6a bzw. 5b, 6b derart miteinander gekoppelt, dass die Verschiebebewegung des manuell bedienbaren Stellmittels 5b, 6b mit der Verschwenkbewegung oder der Verschiebebewegung des elektromotorischen Verstellmittels 5a, 6a überlagert wird, die auf das jeweilige Lagerelement 9, 7 bzw. den darauf angeordneten Lagerpunkt LP1, LP2 übertragen wird.

Das manuell bedienbare Stellmittel 6b weist ein manuell drehbares Drehelement 12 auf, welches über ein Kegelradgetriebe 13 zur Drehung einer Führungsstange 11 eingerichtet ist, wobei an der Führungsstange 11 ein entlang der der Führungsstange 11 verschiebbares mit dieser drehfest verbundenes Übertragungselement 14 angeordnet ist, welches Übertragungselement 14 zumindest einen Gewindeabschnitt 14a aufweist, der zur Verdrehung oder Verschiebung des zweiten Lagerpunktes LP1, LP2 eingerichtet ist. Durch die getrennte Ausführung der Führungsstange 11 und der Gewindeabschnitte 14a (bzw. 11a) kann die Führungsstange 11 mit den verbleibenden Teilen des manuell bedienbaren Stellmittel 6b (bzw. 5b) in einem Fahrzeugscheinwerfergehäuse vormontiert werden, wodurch die Tragrahmenkonstruktion 3, der beispielsweise schon vormontiert sein kann, in einfacher Weise in ein Fahrzeugscheinwerfergehäuse eingesetzt werden kann.

Ein entlang der Führungsstange 11 verschiebbares zweites Lagerelement 7 steht mit dem Gewindeabschnitt 14a dergestalt in Eingriff, dass eine Drehbewegung des Übertragungselements 14 eine Verschiebebewegung des zweiten Lagerelements 7 bewirkt, wobei der zweite Lagerpunkt LP2 an dem zweiten Lagerelement 7 ausgebildet ist, wobei die Position des Übertragungselements 14 an der Führungsstange 11 mittels eines Halterungsmittels 15 festgelegt wird, welches mit dem Übertragungselement 14 zur gemeinsamen Verschiebung entlang der Führungsstange 11 verbunden ist, wobei das elektromotorische Stellmittel 6a, welches mit der Tragrahmenkonstruktion 3 fest verbunden ist, zur gemeinsamen Verschiebung des Übertragungselements 14 und des Halterungsmittels 15 an dem Halterungsmittel 15 angreift, sodass das zweite Lagerelement 7 mit Hilfe der zweiten Verstelleinrichtung 6 in Richtung einer Hauptabstrahlrichtung des optisch relevanten Bauteils 2 verschiebbar ist, wobei Bewegung des manuellen und des elektromotorischen Stellmittels 6b, 6a einander superpositioniert werden kann. Der Schwenkrahmen 4 weist eine Führungsöffnung auf, die zur Aufnahme eines kugelförmigen Abschnitts 7a des zweiten Lagerelements 7 eingerichtet und parallel zu ersten Achse z orientiert ist, wobei der zweite Lagerpunkt LP2 an dem kugelförmigen Abschnitt 7a ausgebildet ist. Das zweite Lagerelement 7 ist mit Hilfe der zweiten Verstelleinrichtung 6 in Richtung einer Hauptabstrahlrichtung des optisch relevanten Bauteils 2 verschiebbar.

Das zweite Lagerelement 7 greift an dem Schwenkrahmen 4 über den kugelförmigen Abschnitt 7a an. Die Führungsöffnung 8 ist schellenförmig ausgebildet und erlaubt eine Relativverschiebung des kugelförmigen Abschnitts 7a in Richtung der z-Achse in Bezug auf die Führungsöffnung 8, deren Lage durch eine Verschiebung mittels dem zweiten Lagerelement 7 verändert wird.

Die Figur 3 zeigt den Schwenkrahmen 4, der eine zu dem ersten Lagerelement 9 korrespondierende Lagerschale 10 aufweist, wobei das erste Lagerelement 9 zumindest ein quer zu der ersten Achse abstehendes Fixierelement 9a aufweist, welches in einer innerhalb der Lagerschale 10 angeordneten Öffnung 10a eingreift. Der erste Lagerpunkt LP 1 ist dabei auf einem zumindest abschnittsweise kugelförmigen Bereich des ersten Lagerelements 9 ausgebildet. Die Fixierelemente 9a sind im gezeigten Beispiel als zwei orthogonal zur ersten und zweiten Achse z und y orientierte koaxiale Bolzen ausgebildet. Diese Bolzen greifen in die Öffnungen 10a der Lagerschale 10 ein, die im gezeigten Ausführungsbeispiel schlitzförmig ausgebildet ist. Dadurch kann eine Drehbewegung des ersten Lagerelements 9 um die erste Achse z auf den Schwenkrahmen 4 in einfacher Weise sicher übertragen werden, wobei weiterhin ein Schwenken des Schwenkrahmens 4 die durch die Bolzen verlaufende Achse möglich ist. Das elektromotorische Stellmittel 6a weist dabei vorzugsweise einen Elektromotor auf, der dazu eingerichtet ist, das erste Lagerelement 9 um die Achse z zu drehen, und damit den Schwenkrahmen 4 zu verdrehen.

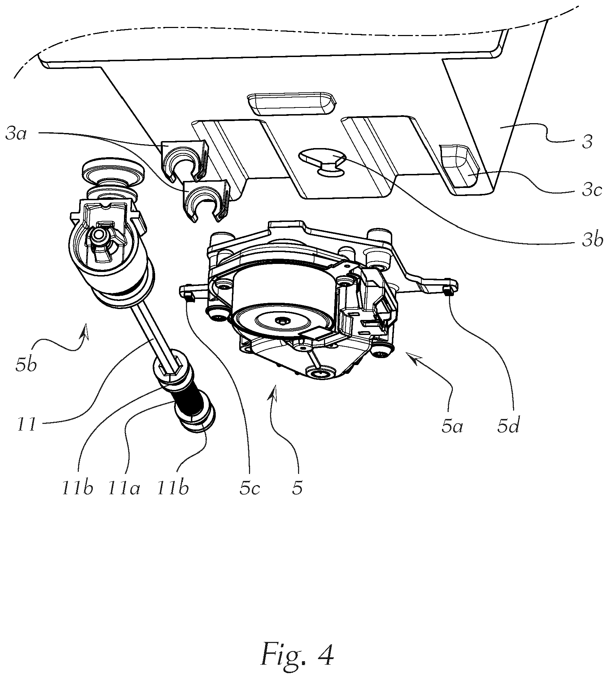

Figur 4 zeigt eine perspektivische Darstellung eines Ausschnitts einer Unterseite des erfindungsgemäßen Einstellsystems 1, wobei darin insbesondere die Verbindung der ersten Verstelleinrichtung 5 mit der Tragrahmenkonstruktion 3 dargestellt ist. Darin weist das manuell bedienbare Stellmittel 5b (das manuell bedienbare Stellmittel 6b funktioniert in gleicher Weise) eine Führungsstange 11 auf, wobei die Führungsstange 11 zumindest einen Gewindeabschnitt 11a (der als eigenständiges Gewindebauteil bzw. Übertragungselement 14 auf der Führungsstange 11 aufsetzt und mit dieser drehfest aber längsverschieblich verbunden ist) aufweist, der zur Verdrehung des ersten Lagerpunktes LP1 an dem elektromotorischen Stellmittel 5a angreift. Hierfür weist das elektromotorische Stellmittel 5a einen Eingriffsbereich 5c auf, der ein zu dem Gewindeabschnitt 11a korrespondierendes Gewinde aufweist, welches im zusammengebauten Zustand des Einstellsystems 1 auf diesem Gewindeabschnitt 11a aufsitzt. Dabei wird die Führungsstange 11 mittels zweier Halterungsabschnitte 11b auf der Tragrahmenkonstruktion 3 aufgeklemmt, indem diese Abschnitte in entsprechende Halteklammern 3a der Tragrahmenkonstruktion 3 eingerastet werden. Eine Drehbewegung der Führungsstange 11 führt zu einer Drehung des Gewindeabschnitts 11a, der über drehfest mit der Führungsstange 11 verbunden ist. Im gezeigten Beispiel wird die drehfeste Verbindung des Gewindeabschnitts 11a über eine Sechskantöffnung im Gewindeabschnitt 11a erzielt, der auf einem korrespondierenden sechseckigen Querschnitt der Führungsstange 11 aufsitzt. Eine axiale Drehung der Führungsstange 11 führt damit zu einer Drehung Gewindeabschnittes 11a, wodurch der Eingriffsabschnitt 5c verschoben wird. Die Verschiebung des Eingriffsabschnittes 5c bewirkt ein Verdrehen des elektromotorischen Stellmittels 5a um die erste Achse z, die den ersten Lagerpunkt LP1 durchsetzt.

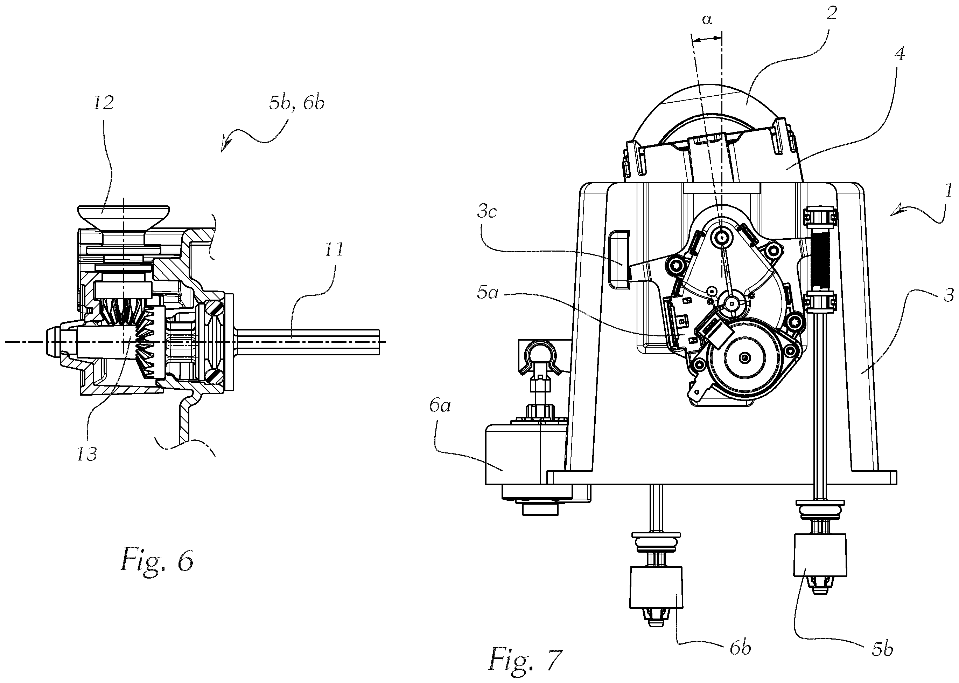

Das erste Lagerelement 9 ist in der Tragrahmenkonstruktion 3 gehalten, indem das Lagerelement 9 in eine in der Tragrahmenkonstruktion 3 vorgesehene Öffnung 3b eingesetzt und fest gehalten werden kann. Zu diesem Zweck weist diese Öffnung 3b einen kreisförmigen verengten Abschnitt auf, indem das erste Lagerelement 9 durch gezieltes Verdrehen eingesetzt und gehalten werden kann. Hierfür weist das erste Lagerelement 9, wie in Fig. 3 gezeigt, zwei einander gegenüberliegende Halterungsplättchen 9b auf, die mittels einem länglichen Steg 9c verbunden sind. Dieser Steg 9c kann in die Öffnung 3b eingeführt und im Anschluss verdreht werden, sodass der Steg 9c innerhalb der verengten kreisförmigen Öffnung gehalten wird, wobei die Halterungsplättchen 9b oberhalb und unterhalb der Öffnung aufliegen, sodass das erste Lagerelement 9 drehbar in der Öffnung 3b gehalten ist. Zu Führungszwecken weist das elektromotorische Stellmittel 5a einen Führungsabschnitt 5d (siehe Figur 4) auf, der im eingebauten Zustand in eine Führungshalterung 3c der Tragerahmenkonstruktion 3 eingreift. Wie in Figur 7 erkennbar, ist das elektromotorische Stellmittel 5a mit der Tragrahmenkonstruktion 3 im montierten Zustand des Einstellsystems 1 verbunden und kann mittels der manuell bedienbaren Verstelleinrichtung 5b um die Achse z geschwenkt werden, wobei in dem gezeigten Beispiel eine Verdrehung um den Winkel α dargestellt ist.

Figur 6 zeigt einen Querschnitt einer beispielhaften manuellen Verstelleinrichtung 5b oder 6b, wobei das manuell bedienbare Stellmittel jeweils ein manuell drehbares Drehelement 12 aufweist, welches über ein Kegelradgetriebe 13 zur Drehung der Führungsstange 11 eingerichtet ist.

Die Figur 5 zeigt eine perspektivische Schnittdarstellung der Tragrahmenkonstruktion 3 mit der oberhalb angeordneten zweiten Verstelleinrichtung 6. Darin ist erkennbar, dass es sich bei dem elektromotorischen Stellmittel 6a um einen Motor handelt, der dazu eingerichtet ist, eine Linearverschiebung eines Halterungsmittels 15 durchzuführen. Dieses Halterungsmittel 15 weist eine Klemme 15a auf, die dazu eingerichtet ist, auf ein auf der Führungsstange 11 verschiebbar gelagertes Übertragungselement 14 einzugreifen und damit fest zu verbinden. Das Übertragungselement 14 weist den Gewindeabschnitt 14a auf, der mit einem zweiten Lagerelement 7 in Eingriff steht, indem das zweite Lagerelement 7 eine Klemme 7b aufweist, die über einen korrespondierenden Gewindeabschnitt verfügt. Eine Drehbewegung der Führungsstange 11, wird aufgrund des sechseckigen Querschnitts der Führungsstange 11 und der korrespondierenden sechseckigen Führungsöffnung in dem Übertragungselement 14 auf den Gewindeabschnitt 14a übertragen, wodurch sich das zweite Lagerelement 7 in Bezug auf den Gewindeabschnitt 14a sowie das Halterungsmittel 15 verschiebt. Die durch das manuell bedienbare Stellmittel 6b bewirkte Verschiebebewegung ist damit mit eine Verschiebebewegung des elektromotorischen Stellmittels 6a superpositioniert. Das Halterungsmittel 15 weist Eingriffsmittel 15b auf, die dazu eingerichtet sind in Führungsbahnen 3d der Tragrahmenkonstruktion 3 einzugreifen und darin geführt zu werden.

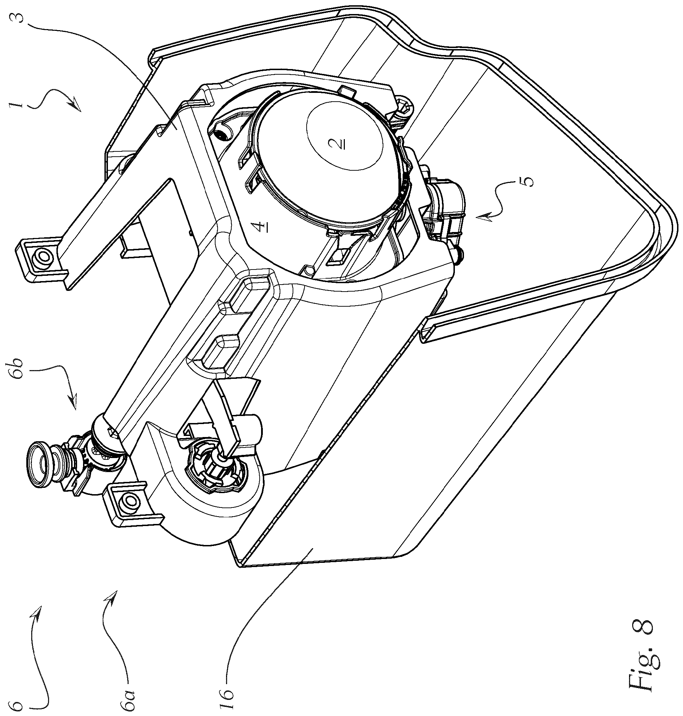

Abschließend sei auf die Figur 8 verwiesen, die einen Ausschnitt aus einem Fahrzeugscheinwerfergehäuse 16 zeigt, in welchem das Einstellsystem 1 im eingebauten Zustand gehalten wird. Hierbei sind die zweite Verstelleinrichtung 6 sowie ein Teil der ersten Verstelleinrichtung 5 erkennbar. Die manuell bedienbaren Stellmittel 5b, 6b durchsetzen dabei typischerweise das Fahrzeugscheinwerfergehäuse, sodass das Drehelement 9 von einem außerhalb des Scheinwerfers liegenden Bereich aus zugänglich ist und besonders einfach manuell bedient werden kann. Das erste und das zweite Lagerelement 9 und 7 bilden einen Teil der Tragrahmenkonstruktion 3.

In Anbetracht dieser Lehre kann die Erfindung in beliebiger dem Fachmann bekannter Weise abgeändert werden und ist daher nicht auf die gezeigten Ausführungsformen beschränkt.

## Patentansprüche

1. Einstellsystem (1) zum Einstellen eines optisch relevanten Bauteils (2) eines Fahrzeugscheinwerfers, umfassend
- eine Tragrahmenkonstruktion (3) mit einem ersten und einem zweiten Lagerpunkt (LP1, LP2), die eine erste Achse (z) ausbilden;
- einen zumindest teilweise innerhalb der Tragrahmenkonstruktion (3) angeordneten Schwenkrahmen (4); und
- eine erste Verstellvorrichtung (5);
wobei der Schwenkrahmen (4) zur Aufnahme des optisch relevanten Bauteils (2) eingerichtet ist und mittels der ersten Verstellvorrichtung (5) um die erste Achse (z), vorzugsweise um eine vertikale Achse, verschwenkbar, insbesondere drehbar, ist, wobei die erste Verstellvorrichtung (5) ein elektromotorisches Stellmittel (5a) umfasst, welches an dem ersten Lagerpunkt (LP1) zur Drehung des Schwenkrahmens (4) um die erste Achse (z) angreift, **dadurch gekennzeichnet, dass** die erste Verstellvorrichtung (5) zudem ein manuell bedienbares Stellmittel (5b) umfasst, welches zur Drehung des elektromotorischen Stellmittels (5a) um die erste Achse (z) an dem elektromotorischen Stellmittel (5a) angreift.

2. Einstellsystem (1) nach Anspruch 1, **dadurch gekennzeichnet, dass** das manuell bedienbare Stellmittel (5b) außerhalb von dem ersten Punkt (LP1) an dem elektromotorischen Stellmittel (5a) angreift.

3. Einstellsystem (1) nach Anspruch 1 oder 2, **dadurch gekennzeichnet, dass** das Einstellsystem (1) eine zweite Verstelleinrichtung (6) aufweist, mittels welcher der zweite Lagerpunkt (LP2) verschiebbar ist.

4. Einstellsystem (1) nach Anspruch 3, **dadurch gekennzeichnet, dass** der zweite Lagerpunkt (LP2) in Richtung einer Hauptabstrahlrichtung des optisch relevanten Bauteils (2) verschiebbar ist.

5. Einstellsystem (1) nach Anspruch 3 oder 4, **dadurch gekennzeichnet, dass** die zweite Verstelleinrichtung (6) ein elektromotorisches Stellmittel (6a) aufweist.

6. Einstellsystem (1) nach einem der Ansprüche 3 bis 5, **dadurch gekennzeichnet, dass** die zweite Verstelleinrichtung (6) ein manuell bedienbares Stellmittel (6b) aufweist.

7. Einstellsystem (1) nach Anspruch 5 und 6, **dadurch gekennzeichnet, dass** das elektromotorische und das manuell bedienbare Stellmittel (6a, 6b) der zweiten Verstelleinrichtung (6) jeweils zur Erzeugung einer Verschiebebewegung eingerichtet sind, die einander überlagert sind.

8. Einstellsystem (1) nach Anspruch 1 oder 2, **dadurch gekennzeichnet, dass** das erste manuell bedienbare Stellmittel (5b, 6b) ein manuell drehbares Drehelement (12) aufweist, welches über ein Kegelradgetriebe (13) zur Drehung einer Führungsstange (11) eingerichtet ist, wobei die Führungsstange (11) zumindest einen Gewindeabschnitt (11a, 14a) aufweist, der zur Verdrehung oder Verschiebung des ersten oder des zweiten Lagerpunktes (LP1, LP2) eingerichtet ist.

9. Einstellsystem (1) nach einem der Ansprüche 1 bis 8, **dadurch gekennzeichnet, dass** der erste Lagerpunkt (LP1) durch ein zumindest abschnittsweis kugelförmiges erstes Lagerelement (9) ausgebildet ist, wobei der Schwenkrahmen (4) eine zu dem ersten Lagerelement (9) korrespondierende Lagerschale (10) aufweist, wobei das erste Lagerelement (9) zumindest ein quer zur ersten Achse (z) abstehendes Fixierelement (9a) aufweist, welches in eine in der Lagerschale (10) vorgesehenen Öffnung (10a) eingreift, wobei vorzugsweise das Fixierelement (9a) als zwei normal zur ersten Achse (z) orientierte koaxiale Bolzen ausgebildet ist.

10. Einstellsystem (1) nach Anspruch 9, **dadurch gekennzeichnet, dass** das die Öffnung (10a) in der Lagerschale (10) schlitzförmig ausgebildet ist.

11. Einstellsystem (1) nach den Ansprüchen 3, 4, 5 und 6, **dadurch gekennzeichnet, dass** das manuell bedienbare Stellmittel (6b) ein manuell drehbares Drehelement (12) aufweist, welches über ein Kegelradgetriebe (13) zur Drehung einer Führungsstange (11) eingerichtet ist, wobei an der Führungsstange (11) ein entlang der der Führungsstange (11) verschiebbares mit dieser drehfest verbundenes Übertragungselement (14) angeordnet ist, welches Übertragungselement (14) zumindest einen Gewindeabschnitt (14a) aufweist, der zur Verdrehung oder Verschiebung des zweiten Lagerpunktes (LP1, LP2) eingerichtet ist.

12. Einstellsystem (1) nach Anspruch 11, **dadurch gekennzeichnet, dass** ein entlang der Führungsstange (11) verschiebbares zweites Lagerelement (7) mit dem Gewindeabschnitt (14a) dergestalt in Eingriff steht, dass eine Drehbewegung des Übertragungselements (14) eine Verschiebebewegung des zweiten Lagerelements (7) bewirkt, wobei der zweite Lagerpunkt (LP2) an dem zweiten Lagerelement (7) ausgebildet ist, wobei die Position des Übertragungselements (14) an der Führungsstange (11) mittels eines Halterungsmittels (15) festgelegt wird, welches mit dem Übertragungselement (14) zur gemeinsamen Verschiebung entlang der Führungsstange (11) verbunden ist, wobei das elektromotorische Stellmittel (6a) zur gemeinsamen Verschiebung des Übertragungselements (14) und des Halterungsmittels (15) an dem Halterungsmittel (15) angreift.

13. Einstellsystem (1) nach Anspruch 12, **dadurch gekennzeichnet, dass** der Schwenkrahmen (4) eine Führungsöffnung (8) aufweist, die zur Aufnahme eines kugelförmigen Abschnitts (7a) des zweiten Lagerelements (7) eingerichtet und parallel zu ersten Achse (z) orientiert ist, wobei der zweite Lagerpunkt (LP2) an dem kugelförmigen Abschnitt (7a) ausgebildet ist.

14. Fahrzeugscheinwerfergehäuse (16) mit einem in dem Fahrzeugscheinwerfergehäuse aufgenommenen Einstellsystem (1) nach einem der bisherigen Ansprüche.

15. Fahrzeugscheinwerfer mit einem Einstellsystem (1) nach einem der Ansprüche 1 bis 13 oder einem Fahrzeugscheinwerfergehäuse (16) nach Anspruch 14.

## Claims

1. A setting system (1) for setting an optically relevant component (2) of a vehicle headlight, comprising:
- a supporting frame structure (3) including a first and a second bearing point (LP1, LP2), which form a first axis (z);
- a pivot frame (4) arranged at least partially within the supporting frame structure (3); and
- a first adjustment device (5),
the pivot frame (4) being configured to receive the optically relevant component (2) and being pivotable, and in particular rotatable, about the first axis (z), preferably about a vertical axis, by means of the first adjustment device (5), and the first adjustment device (5) comprising an electric motor-operated actuator (5a) that engages on the first bearing point (LP1) so as to rotate the pivot frame (4) about the first axis (z), **characterized in that** the first adjustment device (5) furthermore comprises a manually operable setting means (5b) that engages the electric motor-operated actuator (5a) so as to rotate the electric motor-operated actuator (5a) about the first axis (z).

2. The setting system (1) according to claim 1, **characterized in that** the manually operable setting means (5b) engages on the electric motor-driven actuator (5a) outside the first point (LP1).

3. The setting system (1) according to claim 1 or 2, **characterized in that** the setting system (1) comprises a second adjustment device (6), by means of which the second bearing point (LP2) can be displaced.

4. The setting system (1) according to claim 3, **characterized in that** the second bearing point (LP2) can be displaced in the direction of a main radiation direction of the optically relevant component (2).

5. The setting system (1) according to claim 3 or 4, **characterized in that** the second adjustment device (6) comprises an electric motor-driven actuator (6a).

6. The setting system (1) according to any one of claims 3 to 5, **characterized in that** the second adjustment device (6) comprises a manually operable setting means (6b).

7. The setting system (1) according to claims 5 and 6, **characterized in that** the electric motor-operated actuator and the manually operable setting means (6a, 6b) of the second adjustment device (6) are each configured to generate a displacement movement, which are superposed.

8. The setting system (1) according to claim 1 or 2, **characterized in that** the first manually operable setting means (5b, 6b) comprises a manually rotatable rotating element (12), which via a bevel gear (13) is configured to rotate a guide rod (11), the guide rod (11) comprising at least one threaded section (11a, 14a) configured to rotate or displace the first or the second bearing point (LP1, LP2).

9. The setting system (1) according to any one of claims 1 to 8, **characterized in that** the first bearing point (LP1) is formed by a first bearing element (9) that is spherical at least in sections, the pivot frame (4) comprising a bearing shell (10) corresponding to the first bearing element (9), the first bearing element (9) comprising at least one fixing element (9a), which projects transversely with respect to the first axis (z) and engages in an opening (10a) provided in the bearing shell (10), the fixing element (9a) preferably being designed as two coaxial pins oriented perpendicular to the first axis (z).

10. The setting system (1) according to claim 9, **characterized in that** the opening (10a) in the bearing shell (10) has a slot-shaped design.

11. The setting system (1) according to claims 3, 4, 5 and 6, **characterized in that** the manually operable setting means (6b) comprises a manually rotatable rotating element (12), which via a bevel gear (13) is configured to rotate a guide rod (11), a transmission element (14) that is displaceable along the guide rod (11) and non-rotatably connected thereto being arranged on the guide rod (11), the transmission element (14) comprising at least one threaded section (14a) configured to rotate or displace the second bearing point (LP1, LP2).

12. The setting system (1) according to claim 11, **characterized in that** a second bearing element (7), which is displaceable along the guide rod (11), is engaged with the threaded section (14a) so that a rotational movement of the transmission element (14) causes a displacement movement of the second bearing element (7), the second bearing point (LP2) being formed on the second bearing element (7), the position of the transmission element (14) on the guide rod (11) being fixed by means of a fastening means (15), which is connected to the transmission element (14) for the joint displacement along the guide rod (11), the electric motor-driven actuator (6a) engaging on the fastening means (15) for the joint displacement of the transmission element (14) and the fastening means (15).

13. The setting system (1) according to claim 12, **characterized in that** the pivot frame (4) includes a guide opening (8), which is configured to receive a spherical segment (7a) of the second bearing element (7) and is oriented parallel to the first axis (z), the second bearing point (LP2) being formed on the spherical segment (7a).

14. A vehicle headlight housing (16), comprising a setting system (1) according to any one of preceding claims accommodated in the vehicle headlight housing.

15. A vehicle headlight, comprising a setting system (1) according to any one of claims 1 to 13 or a vehicle headlight housing (16) according to claim 14.

## Revendications

1. Système de réglage (1) pour le réglage d'un élément optiquement pertinent (2) d'un phare de véhicule, comportant
- une structure de cadre support (3) ayant un premier et un second point d'appui (LP1, LP2), qui forment un premier axe (z) ;
- un cadre pivotant (4) disposé au moins partiellement à l'intérieur de la structure de cadre support (3) ; et
- un premier dispositif de réglage (5) ;
dans lequel le cadre pivotant (4) est agencé pour la réception de l'élément optiquement pertinent (2) et est apte à pivoter, en particulier, apte à tourner, au moyen du premier dispositif de réglage (5) autour du premier axe (z), de préférence autour d'un axe vertical, le premier dispositif de réglage (5) comportant un moyen de réglage (5a) à moteur électrique, qui vient en prise avec le premier point d'appui (LP1) pour la rotation du cadre pivotant (4) autour du premier axe (z), **caractérisé par le fait que** le premier dispositif de réglage (5) comporte en outre un moyen de réglage (5b) actionnable manuellement, lequel vient en prise avec le moyen de réglage (5a) à moteur électrique pour la rotation du moyen de réglage (5a) à moteur électrique autour du premier axe (z).

2. Système de réglage (1) selon la revendication 1, **caractérisé par le fait que** le moyen de réglage (5b) actionnable manuellement vient en prise avec le moyen de réglage (5a) à moteur électrique à l'extérieur du premier point (LP1).

3. Système de réglage (1) selon l'une des revendications 1 ou 2, **caractérisé par le fait que** le système de réglage (1) présente un second dispositif de réglage (6), au moyen duquel le second point d'appui (LP2) est déplaçable.

4. Système de réglage (1) selon la revendication 3, **caractérisé par le fait que** le second point d'appui (LP2) est déplaçable dans le sens d'une direction de rayonnement principal de l'élément optiquement pertinent (2) .

5. Système de réglage (1) selon l'une des revendications 3 ou 4, **caractérisé par le fait que** le second dispositif de réglage (6) présente un moyen de réglage (6a) à moteur électrique.

6. Système de réglage (1) selon l'une des revendications 3 à 5, **caractérisé par le fait que** le second dispositif de réglage (6) présente un moyen de réglage (6b) actionnable manuellement.

7. Système de réglage (1) selon l'une des revendications 5 et 6, **caractérisé par le fait que** le moyen de réglage à moteur électrique et le moyen de réglage actionnable manuellement (6a, 6b) du second dispositif de réglage (6) sont agencés chacun pour la réalisation d'un mouvement de déplacement, mouvements qui sont superposés l'un à l'autre.

8. Système de réglage (1) selon l'une des revendications 1 ou 2, **caractérisé par le fait que** le premier moyen de réglage actionnable manuellement (5b, 6b) présente un élément rotatif (12) apte à tourner manuellement, lequel est agencé pour la rotation d'une tige de guidage (11) par l'intermédiaire d'un engrenage conique (13), la tige de guidage (11) présentant au moins une partie filetée (11a, 14a), qui est agencée pour la rotation ou le déplacement du premier ou du second point d'appui (LP1, LP2).

9. Système de réglage (1) selon l'une des revendications 1 à 8, **caractérisé par le fait que** le premier point d'appui (LP1) est formé par un premier élément d'appui (9) au moins par endroits sphérique, le cadre pivotant (4) présentant une coque de support (10) correspondant au premier élément d'appui (9), le premier élément d'appui (9) présentant au moins un élément de fixation (9a) faisant saillie transversalement au premier axe (z), lequel élément de fixation s'engage dans une ouverture (10a) prévue dans la coque de support (10), de préférence l'élément de fixation (9a) étant réalisé sous la forme de deux boulons coaxiaux orientés perpendiculairement au premier axe (z).

10. Système de réglage (1) selon la revendication 9, **caractérisé par le fait que** l'ouverture (10a) est réalisée sous forme de fente dans la coque de support (10).

11. Système de réglage (1) selon l'une des revendications 3, 4, 5 et 6, **caractérisé par le fait que** le moyen de réglage (6b) actionnable manuellement présente un élément rotatif (12) apte à être tourné manuellement, qui est agencé pour la rotation d'une tige de guidage (11) par l'intermédiaire d'un engrenage conique (13), un élément de transmission (14) déplaçable le long de la tige de guidage (11), relié de manière solidaire en rotation avec celle-ci, étant disposé sur la tige de guidage (11), lequel élément de transmission (14) présente au moins une partie filetée (14a), qui est agencée pour la rotation ou le déplacement du second point d'appui (LP1, LP2).

12. Système de réglage (1) selon la revendication 11, **caractérisé par le fait qu'**un second élément d'appui (7) déplaçable le long de la tige de guidage (11) est en prise avec la partie filetée (14a) de façon qu'un mouvement de rotation de l'élément de transmission (14) provoque un mouvement de déplacement du second élément d'appui (7), le second point d'appui (LP2) étant formé sur le second élément d'appui (7), la position de l'élément de transmission (14) étant fixé à l'aide d'un moyen de retenue (15) sur la tige de guidage (11), qui est relié le long de la tige de guidage (11) pour le déplacement commun avec l'élément de transmission (14), le moyen de réglage (6a) à moteur électrique venant en prise avec le moyen de retenue (15) pour le déplacement commun de l'élément de transmission (14) et du moyen de retenue (15).

13. Système de réglage (1) selon la revendication 12, **caractérisé par le fait que** le cadre pivotant (4) présente une ouverture de guidage (8), qui est agencée pour la réception d'une partie sphérique (7a) du second élément d'appui (7) et est orientée parallèlement au premier axe (z), le second point d'appui (LP2) étant formé sur la partie sphérique (7a).

14. Boîtier (16) pour phare de véhicule comportant un système de réglage (1) reçu dans le boîtier pour phare de véhicule selon l'une des revendications précédentes.

15. Phare de véhicule comportant un système de réglage (1) selon l'une des revendications 1 à 13 ou un boîtier pour phare de véhicule (16) selon la revendication 14.
